# EUROPÄISCHE PATENTSCHRIFT

(11) **EP 1 008 222 B1**
(45) Veröffentlichungstag und Bekanntmachung des Hinweises auf die Patenterteilung: **26.02.2003**
(21) Anmeldenummer: 98946439.1
(22) Anmeldetag: 28.08.1998
(51) Int. Cl.: H02K 1/08, H02K 3/52

(54) **ELEKTROMOTOR**
ELECTRIC MOTOR
MOTEUR ELECTRIQUE

(30) Priorität: 29.08.1997 DE 19737752
(43) Veröffentlichungstag der Anmeldung: 14.06.2000
(73) Patentinhaber: Schmid, Egon, 88605 Sauldorf 3 (DE)
(72) Erfinder: Schmid, Egon, 88605 Sauldorf 3 (DE)
(74) Vertreter: Weiss, Peter, Dr. rer. nat.
(86) Internationale Anmeldenummer: EP9805457
(87) Internationale Veröffentlichungsnummer: WO99012246

(56) Entgegenhaltungen:
- EP-A- 0 500 457
- DE-A- 4 436 257
- DE-C- 829 613
- GB-A- 2 310 545
- US-A- 4 246 505

## Beschreibung

Die Erfindung betrifft einen Elektromotor mit einem Stator und einem Rotor, wobei Stator und/oder Rotor Wicklungsträger einer Wicklung mit zumindest zwei Anschlüssen aufweisen, wobei die Wicklungsträger einzeln lösbar mit Stator und/oder Rotor verbunden sind.

Elektromotoren bzw. Generatoren sind eine der wichtigsten elektrischen Maschinen. Sie finden in den vielfältigsten Formen und in den unterschiedlichsten Bereichen des täglichen Lebens Anwendung. Wesentliches Merkmal des Elektromotors ist, dass er elektrische Energie in mechanische Arbeit umformt. Dabei ist er meist als rotierende Maschine aufgebaut, wobei ein Rotor um einen Stator dreht. Bei dem Rotor kann es sich um den eigentlichen Anker handeln, aber auch, insbesondere bei Radnabenmotoren, kann der Rotor der äussere, den Ankerteil umfangende Erregerteil sein, der dann beispielsweise mit einer Felge od.dgl. verbunden ist.

Die Herstellung der handelsüblichen Motoren weist einige Schwierigkeiten auf. Erregerteil und/oder Ankerteil besitzen Träger, Nuten od.dgl., um die bzw. in die Wicklungen eingelegt werden. In den meisten Fällen geschieht dies von Hand.

In der W096/23344 ist beispielsweise ein Herstellungsverfahren für einen Motor gezeigt, bei dem es bereits möglich ist, die Wicklungsträger automatisch zu bewickeln. Hierzu werden die Wicklungsträger, bevor sie mit dem Stator und/oder Rotor verbunden werden, bewickelt. Danach werden sie in achsparallele Nuten eingesetzt und dort festgelegt.

Die DE 36 38 228 A1 beschreibt einen Elektromotor (Aussenläufer-Schenkelpolmotor) mit einem Stator und einem Rotor, wobei der Stator Wicklungsträger mit jeweils einer Wicklung mit zumindest zwei Anschlüssen aufweist. Diese benachbarten Wicklungsträger sind jeder für sich mit dem Stator verbunden.

Aus der GB-A 2 310 545 ist ein Elektromotor bekannt, bei dem benachbarte Wicklungsträger an ihrem äusseren Umfang untereinander verbunden sind.

Schwierigkeiten bestehen weiterhin bei der Festlegung der Wicklungsträger an dem Stator und/oder Rotor und vor allem auch bei der elektrischen Verbindung der einzelnen Wicklungen, wobei durch diese elektrische Verbindung die Ausrichtung des Wicklungsträgers als Nord- bzw. Südpol geschieht.

Ein Elektromotor der o.g. Art ist aus der DE 829 613 C bekannt. Dieser Elektromotor ist so ausgestaltet, dass zwei benachbarte Wicklungsträger in eine schwalbenschwanzförmige Nut eines Jochkörpers eingesetzt und dort durch keilartige Teile verspannt werden.

Der vorliegenden Erfindung liegt die Aufgabe zugrunde, die Herstellung eines Elektromotors weiter wesentlich zu vereinfachen und dabei Leistungsverluste zu reduzieren.

Zur Lösung dieser Aufgabe führt dass vom Stator und/oder Rotor eine Platte, ein Ring od. dgl. abragt, die/der mit der den Wicklungsträgern zugewandten Fläche des Stators und/oder Rotors einen Winkel von kleiner als 90° einschliesst, wobei ein Befestigungselement die Wicklungsträger mit ihrem Fussbereich in diesen Winkel hineinpresst.

Diese Ausgestaltung der Wicklungsträger hat den Vorteil, dass der Motor quasi im Baukastenprinzip hergestellt wird. Er kann leicht zusammengebaut und wieder leicht auseinandergenommen werden. Eine Bewicklung der Wicklungsträger erfolgt vor dem Zusammenbau, so dass einer automatischen Bewicklung nichts im Wege steht.

Zur Verbindung der Wicklungsträger untereinander bzw. mittels eines gemeinsamen Befestigungselementes bietet sich vor allem ein Fussbereich des Wicklungsträgers an. Befindet sich beispielsweise ein Stator in der Mitte des Motors als Ankerkern, so können die Wicklungsträger radial von diesem Ankerkern abragend angeordnet werden. Dabei stossen ihre Fussbereiche bevorzugt aneinander und werden entweder untereinander verbunden oder aber über ein gemeinsames Befestigungselement festgelegt.

Werden beispielsweise Schraubenbolzen als Befestigungselemente verwendet und diese angezogen, so werden die Wicklungsträger bzw. deren Fussbereiche in den Winkel zwischen Ankerkern und Platte hineingepresst, so dass eine gute Anlage des Wicklungsträgers am Ankerkern stattfindet.

Der Schraubenbolzen greift in eine Gewindebohrung in einer Platte ein, die dem Ankerkern zugeordnet ist. Diese Platte bildet einen überstehenden Ring aus, so dass die Wicklungsträger auf dieser Platte aufsitzen.

Die Verbindung durch ein gemeinsames Befestigungselement erfolgt der Einfachheit halber dadurch, dass in den Fussbereich des Wicklungsträgers seitlich Nuten eingeformt sind, wobei zwei Nuten von benachbarten Wicklungsträgern zusammen eine Aufnahmebohrung für beispielsweise einen Schraubenbolzen bilden. Aus diesem Grunde sind bevorzugt die Seitenflanken des Fussbereiches konisch zueinander verlaufend ausgestaltet, wobei sie bevorzugt radial in Richtung auf einen Mittelpunkt des Ankerkerns hin verlaufen.

Die Nuten haben ferner noch den Vorteil bei der Bewicklung, dass in diese Nuten Spannkrallen eingreifen können, die den Wicklungsträger beim Wickeln festhalten. Hierdurch wird auch das Bewickeln wesentlich erleichtert.

In einem anderen Ausführungsbeispiel der Erfindung ist auch an eine formschlüssige Verbindung der Wicklungsträger miteinander gedacht. Dies kann beispielsweise durch eine Nut-/Federverbindung geschehen, die schwalbenschwanzförmig ausgestattet ist.

Zur Festlegung der Wicklungsträger auf dem Ankerkern können beispielsweise beidseits Platten aufgeschraubt werden, die den Fussbereich der Wicklungsträger übergreifen.

Denkbar ist auch, dass jeder einzelne Wicklungsträger mit dem Rotor und/oder Stator separat verbunden ist. Hierzu genügt in einem Ausführungsbeispiel ein Befestigungselement, beispielsweise eine Schraube, welche den Fussbereich des Wicklungsträgers durchsetzt.

Ein besonderes Augenmerk der vorliegenden Erfindung ist jedoch auf die Festlegung der Fahnen der Wicklung zu richten. Gedacht ist daran, die Wicklungen immer in gleicher Richtung auf den Wicklungsträger aufzuwickeln, so dass auf eine spätere Nord- bzw. Südausrichtung beim Bewickein des Wicklungsträgers kein Wert gelegt werden muss. Die Auswahl der Ausrichtung des Wicklungsträgers geschieht nach dem Aufbringen der Wicklungsträger auf den Stator bzw. Rotor, wobei den Wicklungsträgern eine Platine zugeordnet wird, die zwei separate Leitungsbahnen aufweist. Die eine Leitungsbahn ist mit einem Plus-, die andere Leitungsbahn mit einem Minuspol verbunden. Von jedem Wicklungsträger ragen die beiden Anschlussfahnen ab, wobei je nach der gewünschten Ausrichtung des Wicklungsträgers die eine oder die andere Fahne mit dem einen oder dem anderen Pol verbunden wird. Dies geschieht einfach dadurch, dass die Fahne durch die Platine hindurchgesteckt und mit der entsprechenden Leitungsbahn verlötet wird. Nach dem Durchstecken der Fahnen aller Wicklungsträger kann dies in einem gemeinsamen Lötbad geschehen.

Auf der Platine können im übrigen auch noch weitere Bauelemente für eine Steuerung des Motors angeordnet werden. Bei starken Motoren können die Platinen auch gestapelt werden bzw. einen Multilayeraufbau aufweisen. Hier sind ebenfalls viele Mögliohkeiten denkbar, die von der vorliegenden Erfindung umfasst werden sollen.

Bevorzugt bestehen die Wicklungsträger aus einzelnen geschichteten Blechen. Erfindungsgemäss soll nach der Schichtung eine Feinstbearbeitung dieser Wicklungsträger stattfinden, wobei vor allem die Seitenflächen bearbeitet werden. Hierdurch erfolgt eine weitere mechanische Verbindung der eizelnen Bleche, die zu einer Verbesserung der magnetischen Eigenschaft führt. Ferner kann die magnetische Eigenschaft des Wicklungsträgers auch noch durch die Wahl der Dicke der Bleche günstig beeinflusst werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf einen Teil eines erfindungsgemässen Elektromotors;
Figur 2 eine Seitenansicht eines Teils eines Elektromotors entsprechend Figur 1;
Figur 3 eine Draufsicht auf einen erfindungsgemässen Wicklungsträger;
Figur 4 eine Seitenansicht des Wicklungsträgers gemäss Figur 3;
Figur 5 eine Draufsicht auf ein weiteres Teil eines Ausführungsbeispiels eines erfindungsgemässen Motors.

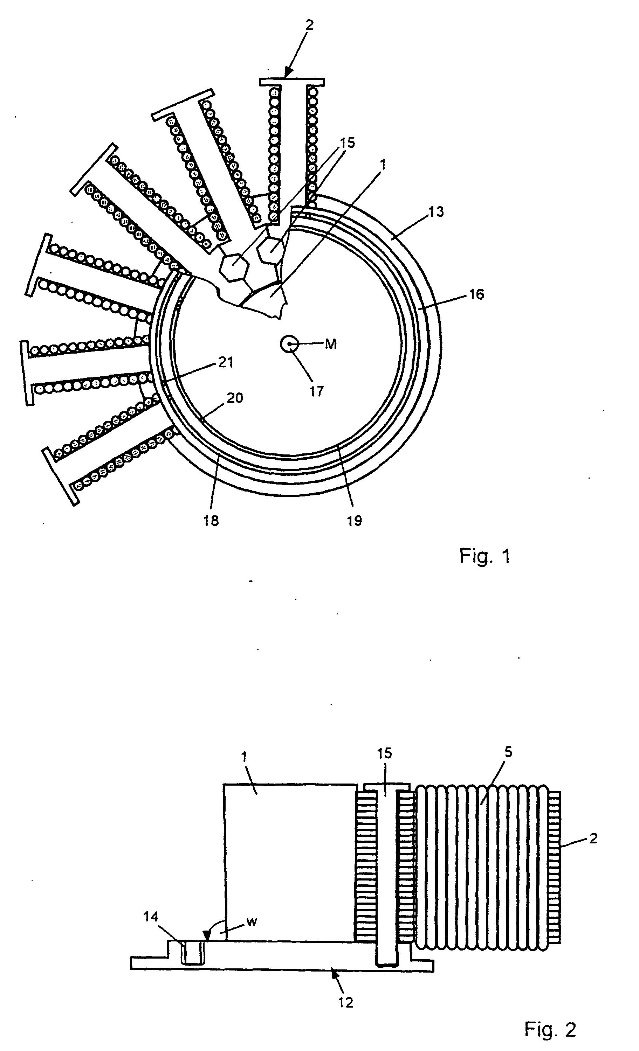

Gemäss den Figuren 1 und 2 ist von einem erfindungsgemässen Elektromotor ein Ankerkern 1 als Teil eines Stators gezeigt. Dieser Ankerkern 1 ist in etwa zylindrisch ausgebildet und mit einer Mehrzahl von Wicklungsträgern 2 belegt.

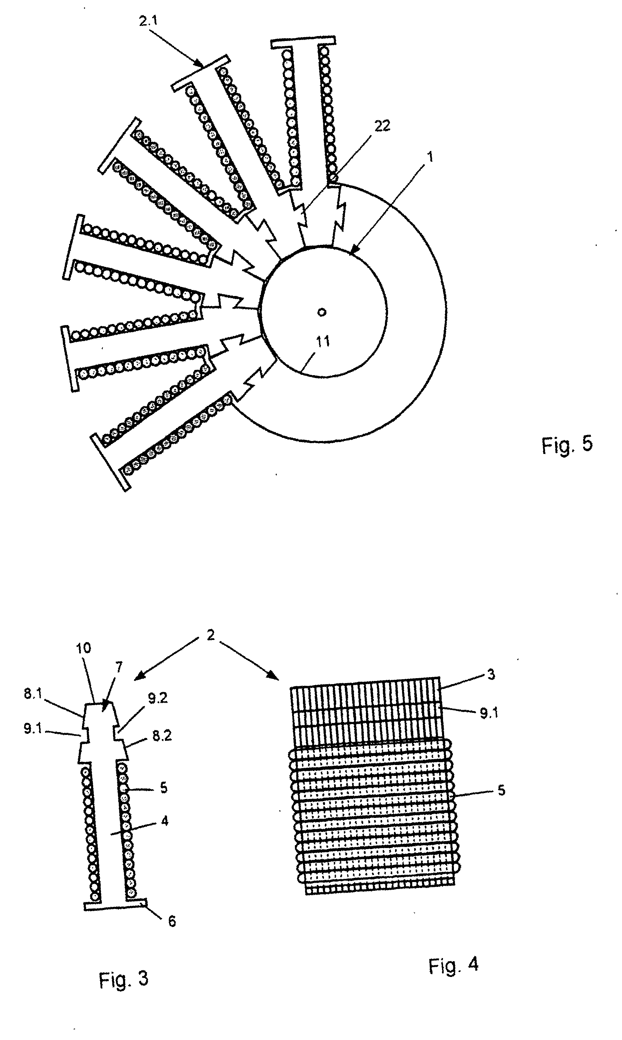

Gemäss den Figuren 3 und 4 ist bevorzugt jeder Wicklungsträger 2 aus einer Mehrzahl von geschichteten Blechen 3 gebildet. Der Wicklungsträger 2 weist einen Grundkörper 4 auf, der von einer Wicklung 5 belegt ist. Stirnwärtig schliesst an den Wicklungsträger 2 ein Querbalken 6 an, der verhindert, dass die Wicklung 5 von dem Grundkörper 4 abgleiten kann.

Anderenends des Querbalkens 6 ist dem Grundkörper 4 ein Fussbereich 7 ungeformt, der querschnittlich gesehen in etwa konisch geformt ist, wobei die beiden Seitenflanken 8. 1 und 8.2 in etwa radial auf einen Mittelpunkt M des Ankerkerns 1 hin verlaufen. In die Seitenflanken 8.1 und 8.2 ist jeweils eine Nut 9.1 bzw. 9.2 eingeformt. Eine Stirnfläche 10 des Fussbereiches 7 kann etwas gekrümmt entsprechend einem Kreisbogen 11 des zylindrischen Ankerkerns 1 ausgeb ildet sein.

Gemäss Figur 2 ist an den Ankerkern 1 eine Platte 12 angesetzt, welche seitlich über den Ankerkern 1 hervorsteht. Hierdurch wird ein seitlich hervorstehender Ring 13 gebildet, in den in regelmässigen Abständen Gewindebohrungen 14 eingeformt sind. Ferner bildet die Platte 12 mit der den Wicklungsträgern 2 zugewandten Fläche des Ankerkerns 1 einen Winkel w von kleiner 90°.

Der Zusammenbau dieses Teils des erfindungsgemässen Elektromotors geschieht folgendermassen:
In einem ersten Arbeitsgang werden die Bleche 3 des Wicklungsträgers 2 , aufeinander geschichtet und bevorzugt stanzpaketiert oder beispielsweise durch Laserschweissen miteinander verbunden. Danach erfolgt eine Feinstbearbeitung dieser geschichteten Wicklungsträger, wodurch die magnetischen Eigenschaften erheblich verbessert werden. Insbesondere werden durch die Feinstbearbeitung Abstände zwischen den Blechen, die beispielsweise durch seitliche Grate entstehen, aufgehoben.

Nunmehr erfolgt eine Bewicklung des Grundkörpers 4 des Wicklungsträgers 2, wobei die Bewicklung immer in der gleichen Richtung erfolgt. Es braucht demnach nicht auf eine Nord- oder Südausrichtung des Wicklungsträgers 2 Rücksicht genommen zu werden.

Nunmehr wird die entsprechende Anzahl von Wicklungsträgern 2 auf die Platte 12 aufgesetzt, wobei sich die Nuten 9.1 bzw. 9.2 im Bereich der Gewindebohrungen 14 befinden. Die Stirnfläche 10 liegt dem Ankerkern 1 an, während die Seitenflanken 8.1 bzw. 8.2 von benachbarten Wicklungsträgern 2 aneinander liegen.

Die Festlegung der Wicklungsträger 2 gegenüber dem Ankerkern 1 bzw. der Platte 12 erfolgt durch Schraubenbolzen 15, welche auch in die Gewindebohrung 14 eingreifen. Beim Festziehen der Schraubenbolzen 15 wird der Fussbereich 7 des Wicklungsträgers infolge des Winkels w kleiner als 90° gegen den Ankerkern 1 gedrückt, so dass eine gute Fixierung des Wicklungsträgers 2 erfolgt.

Von den einzelnen Wicklungsträgern 2 ragen nach oben Anschlussfahnen auf, welche je nach Ausrichtung des Wicklungsträgers als Nord- oder Südpol mit einem Plus- bzw. Minuspol in Verbindung gebracht werden sollen. Dies geschieht über eine Platine 16, die auf dem Ankerkern 1 durch eine Schraube 17 festgelegt ist und zwei kreisförmige Leitungsbahnen 18 und 19 aufweist, die jeweils einen Anschluss an einen Plus- bzw. Minuspol besitzen. Die entsprechenden Anschlussfahnen 20 bzw. 21 der Wicklungen 5 brauchen nur durch die Platine 16 gesteckt und in Kontakt mit den Leitungsbahnen 18 bzw. 19 gebracht zu werden. Dies geschieht beispielsweise bei benachbarten Wicklungsträgern so alternierend, dass jeweils ein Wicklungsträger, der als Südpol augebildet ist, benachbart zu einem als Nordpol ausgebildeten Wicklungsträger angeordnet ist.

In Figur 5 wird anstelle einer Verbindung von zwei benachbarten Wicklungsträgern 2.1 eine formschlüssige Verbindung aufgezeigt, die aus einer Nut-/Federverbindung 22 besteht. Auf diese Weise können die Wicklungsträger 2.1 zusammengesteckt werden, wobei gegebenenfalls zur Festlegung eines derartigen Kranzes von Wicklungsträgern 2.1 noch eine zusätzliche Schraubverbindung entsprechend Figur 1 an zumindest einer Stelle möglich ist.

## Patentansprüche

1. Elektromotor mit einem Stator und einem Rotor, wobei Stator und/oder Rotor Wicklungsträger (2, 2.1) einer Wicklung (5) mit zumindest zwei Anschlüssen aufweisen, wobei die Wicklungsträger (2, 2.1) einzeln lösbar mit Stator und/oder Rotor verbunden sind,
**dadurch gekennzeichnet,**
**dass** vom Stator und/oder Rotor eine Platte (12), ein Ring (13) od. dgl. abragt, die/der mit der den Wicklungsträgern (2, 2.1) zugewandten Fläche des Stators und/oder Rotors einen Winkel (w) von kleiner als 90° einschliesst, wobei ein Befestigungselement (15) die Wicklungsträger (2, 2.1) mit ihrem Fussbereich (7) in diesen Winkel hineinpresst.

2. Elektromotor nach Anspruch 1, **dadurch gekennzeichnet, dass** in den Fussbereich (7) des Wicklungsträgers (2) seitlich Nuten (9.1, 9.2) eingeformt sind, welche der Aufnahme des Befestigungselementes (15) dienen.

3. Elektromotor nach Anspruch 2, **dadurch gekennzeichnet, dass** das Befestigungselement als Schraubenbolzen (15) ausgebildet ist, der in ein Gewindebohrung (14) der am Stator und/oder Rotor festgelegten Platte (12) oder des Rings (13) od. dgl. eingreift.

4. Elektromotor nach Anspruch 1, **dadurch gekennzeichnet, dass** Fussbereiche (7) von Wicklungsträgern (2) eine formschlüssige Verbindung miteinander eingehen.

5. Elektromotor nach Anspruch 4, **dadurch gekennzeichnet, dass** die formschlüssige Verbindung eine Nut-/Federverbindung (22) ist.

6. Elektromotor nach Anspruch 1, **dadurch gekennzeichnet, dass** ein Fussbereich eines Wicklungsträgers von zumindest einer Bohrung und diese von dem Befestigungselement durchsetzt ist.

7. Elektromotor nach wenigstens einem der Ansprüche 1 - 6, **dadurch gekennzeichnet, dass** den Wicklungsträgern (2, 2.1) gegenüber der Platte (12), dem Ring (13) od. dgl. eine' Platine (16) zugeordnet ist, welche jeweils eine Leitungsbahn (18, 19) für eine Stromrichtung aufweist, mit denen jeweils entsprechende Fahnen (20, 21) der Wicklungen (5) verbunden sind.

8. Elektromotor nach Anspruch 7, **dadurch gekennzeichnet, dass** die Platine (16) über ein Befestigungselement (17) an dem Stator und/oder Rotor festgelegt ist.

9. Elektromotor nach Anspruch 7 oder 8, **dadurch gekennzeichnet, dass** die Leitungsbahnen (18, 19) kreisförmig auf der Platine (16) vorgesehen sind.

10. Elektromotor nach einem der Ansprüche 7 - 9, **dadurch gekennzeichnet, dass** die Wicklungen (5) auf ggf. allen Wicklungsträgern (2) in der gleichen Richtung aufgebracht sind.

## Claims

1. Electric motor having a stator and a rotor, stator and/or rotor having winding carriers (2, 2.1) for a winding (5) having at least two connections, the winding carriers (2, 2.1) being individually connected to stator and/or rotor in a detachable manner, **characterised in that** a plate (12), a ring (13) or the like protrudes from stator and/or rotor and forms an angle (w) of less than 90° with the surface of the stator and/or rotor facing the winding carriers (2, 2.1), a securement member (15) pressing the winding carriers (2, 2.1) into this angle with their base region (7).

2. Electric motor according to claim 1, **characterised in that** grooves (9.1, 9.2) are provided laterally in the base region (7) of the winding carrier (2) and serve to accommodate the securement member (15).

3. Electric motor according to claim 2, **characterised in that** the securement member is in the form of a bolt (15), which engages in a threaded bore (14) of the plate (12) or of the ring (13) or the like secured on the stator and/or rotor.

4. Electric motor according to claim 1, **characterised in that** base regions (7) of winding carriers (2) fit into one another in a form-locking manner.

5. Electric motor according to claim 4, **characterised in that** the form-locking connection is a tongue-and-groove connection (22).

6. Electric motor according to claim 1, **characterised in that** one base region of a winding carrier is traversed by at least one bore, and said bore is traversed by the securement member.

7. Electric motor according to at least one of claims 1 - 6, **characterised in that** a bar (16) is associated with the winding carriers (2, 2.1) opposite the plate (12), the ring (13) or the like, said bar having a respective conduction path (18, 19) for each current direction, and corresponding lugs (20, 21) for the windings (5) being respectively connected to said paths.

8. Electric motor according to claim 7, **characterised in that** the bar (16) is secured on the stator and/or rotor via a securement member (17).

9. Electric motor according to claim 7 or 8, **characterised in that** the conduction paths (18, 19) are provided in a circular manner on the bar (16).

10. Electric motor according to one of claims 7 - 9, **characterised in that** the windings (5) are applied to possibly all of the winding carriers (2) in the same direction.

## Revendications

1. Moteur électrique comportant un stator et un rotor, avec dans le stator et/ou le rotor des supports d'enroulement (2, 2.1) qui portent chacun un enroulement (5) équipé d'au moins deux raccordements et qui sont reliés individuellement de manière amovible au stator et/ou au rotor,
**caractérisé en ce que**
du stator et/ou du rotor dépasse une plaque (12), un anneau (13) ou similaire, qui fait avec la surface du stator et/ou du rotor située en regard des supports d'enroulement (2, 2.1) un angle (w) inférieur à 90°, un élément de fixation (15) maintenant en pression le support d'enroulement (2, 2.1) par la zone de pied (7) de celui-ci dans cet angle.

2. Moteur électrique selon la revendication 1,
**caractérisé en ce que**
dans la zone de pied (7) du support d'enroulement (2) sont formées des rainures latérales (9.1, 9.2) servant de logement à l'élément de fixation (15).

3. Moteur électrique selon la revendication 2,
**caractérisé en ce que**
l'élément de fixation est une vis (15) engagée dans un alésage fileté (14) de la plaque (12) ou de l'anneau (13) ou similaire fixé au stator et/ou au rotor.

4. Moteur électrique selon la revendication 1,
**caractérisé en ce que**
les zones de pied (7) des supports d'enroulement (2) sont reliées entre elles avec verrouillage par combinaison de formes.

5. Moteur électrique selon la revendication 4,
**caractérisé en ce que**
la liaison à combinaison de formes est une liaison par rainure et languette (22).

6. Moteur électrique selon la revendication 1,
**caractérisé en ce que**
la zone de pied d'un support d'enroulement présente au moins un perçage que traverse l'élément de fixation.

7. Moteur électrique selon au moins l'une des revendications 1 à 6,
**caractérisé en ce qu'**
aux supports d'enroulement (2, 2.1) est associée en face de la plaque (12), de l'anneau (13) ou similaire, une platine (16) portant pour chaque direction de courant une piste conductrice (18, 19) reliant par des queues correspondantes (20, 21) les enroulements (5).

8. Moteur électrique selon la revendication 7,
**caractérisé en ce que**
la platine (16) est fixée au stator et/ou au rotor par un élément de fixation (17).

9. Moteur électrique selon la revendication 7 ou 8,
**caractérisé en ce que**
les pistes conductrices (18, 19) sont disposées en cercles sur la platine (16).

10. Moteur électrique selon l'une des revendications 7 à 9,
**caractérisé en ce que**
les enroulements (5) sont montés éventuellement sur tous les supports (2) dans le même sens.
